# EUROPEAN PATENT APPLICATION

(11) **EP 1 503 521 A1**
(43) Date of publication of application: **02.02.2005**
(21) Application number: 03723182.6
(22) Date of filing: 23.04.2003
(51) Int. Cl.: H04B 7/08

(54) **MOBILE COMMUNICATION APPARATUS**

(30) Priority: 09.05.2002 JP 2002134300
(71) Applicant: Matsushita Electric Industrial Co., Ltd., Kadoma-shi, Osaka-fu, 571-8501 (JP)
(72) Inventor: MOCHIZUKI, Makoto, Kamakura-shi, Kanagawa 247-0074 (JP); KAMIYA, Tadahisa, Kakegawa-shi, Shizuoka 436-0045 (JP); SHINOMIYA, Masato, Yokohama-shi, Kanagawa 222-0001 (JP)
(74) Representative: Grünecker, Kinkeldey, Stockmair & Schwanhäusser Anwaltssozietät
(86) International application number: PCT/JP2003/005207
(87) International publication number: WO 2003/096574

(57) **Abstract**

A purpose of the present invention is to improve a reception sensitivity when simultaneous transmitting/receiving operations are not carried out in a mobile communication apparatus capable of performing the simultaneous transmitting/receiving operations. The mobile communication apparatus, according to the present invention, is comprised of an antenna selector (13) for switching a connection between a first antenna A (11) and a second antenna B (12), and is selectively connected with a transmission system which contains a transmission-side filter (14) and a transmitting unit (16), and with respect to a reception system which contains a reception-side filter (15) and a receiving unit (17). In the antenna selector (13), at timing for performing a transmitting operation, the transmission system is connected to any one of the antennas A (11) and B (12) by way of switches A (21) and C (23); at timing for performing a receiving operation, the reception system is connected to any one of the antennas A (11) and B (12) by way of switches B (22) and D (24); and at timing for executing transmitting/receiving operations at the same time, both the transmission-side filter (14) and the reception-side filter (15) are connected to any one of the antennas A (11) and B (12) by way of the switches A (21), B (22), C (23), and D (24), so that an antenna commonly-operable device is constructed.

## Description

### <TECHNICAL FIELD>

The present invention relates to a mobile communication apparatus capable of simultaneously performing a transmitting operation and a receiving operation. Precisely speaking, the present invention is directed to a structure of an antenna switching unit for switching antennas between a transmission system and a reception system.

### <BACKGROUND ART>

In mobile communication systems where portable telephones and the like are employed as portable station terminals, data communication operations can be carried out by utilizing packet communication systems in addition to voice telephone communications. As packet communication operations by utilizing wireless systems, very recently, such packet communication operations capable of simultaneously performing both transmitting operations and receiving operations have been gradually employed, the data transfer rates of which are improved. For instance, when packet communication operations are carried out by way of the TDMA (Time Division Multiple Access) system, asymmetrical packet communication operations have been proposed. That is, in such an asymmetrical packet communication operation, in a single sub-frame equal to 1 unit at which time division multiplexing access operation is carried out, while a plurality of slots used to transfer data along a down-stream direction, i. e., from a base station to a mobile station terminal can be utilized, when there are empty slots, the mobile station terminal performs a receiving operation in a continuous mode. The data transfer rate of the down-stream direction can be improved by such an asymmetrical packet communication operation.

In mobile communication systems capable of performing the above-described data communication operations, as portable type mobile communication apparatus with employment of mobile station terminals, portable type communication apparatus operable in simultaneous transmitting/receiving operations are commercially required.

In mobile communication apparatus operable in simultaneous transmitting/receiving operations, since such a condition that the same antenna is used at the same time in both a transmission system and a reception system may occur, an antenna commonly-operable device is required which includes filters on both the transmission side and the reception side in order to eliminate adverse influences which are mutually caused by both the transmission system and the reception system.

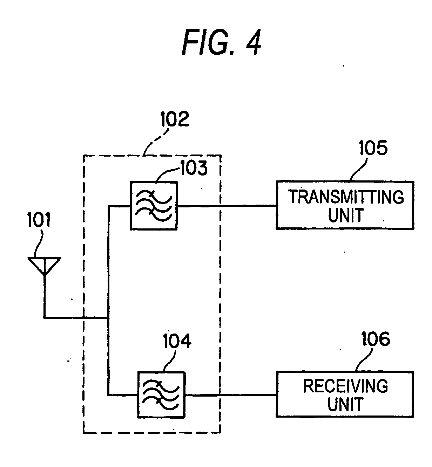

Fig. 4 is a block diagram for representing a structural example of a mobile communication apparatus operable in simultaneous transmitting/receiving operations. This mobile communication apparatus is arranged by connecting an antenna commonly-operable device 102 to an antenna 101, while the antenna commonly-operable device 102 includes a transmission-side filter 103 and a reception-side filter 104. A transmitting unit 105 is connected to the transmission-side filter 103 of the antenna commonly-operable device 102, whereas a receiving unit 106 is connected to the reception-side filter 104. In this arrangement, the antenna 101 is continuously connected to both the transmission system and the reception system, and both the transmitting operation and the receiving operation can be carried out at the same time. At this time, a transmission signal supplied from the transmitting unit 105 is cut off by the reception-side filter 104 in order not to be inputted to the reception system, and also, a reception signal derived from the antenna 101 is cut off by the transmission-side filter 103 in order not to be inputted to the transmission system.

In the above-explained mobile communication apparatus operable in the simultaneous transmitting/receiving operations, in the case that simultaneous transmitting/receiving operations are carried out in a packet communication operation, or the like, since such a condition that the reception system is connected to the transmission system may occur, an input impedance of the reception system is shifted due to an adverse influence caused by an output impedance of the transmission system. As a result, there is a risk that the reception sensitivity is deteriorated. Also in this case, an output impedance of the transmission system is shifted due to an adverse influence caused by an input impedance of the reception system. As a result, there is a risk that the distortion characteristic is deteriorated. This reason is given as follows: That is, both an impedance of the reception system viewed from the transmission side, and an impedance of the transmission system viewed from the reception sideo not completely become infinite at a communication frequency even by the filters of the antenna commonly-operable device, but also are not brought into an ideal open condition.

Also, in the arrangement by providing such an antenna commonly-operable device as shown in Fig. 4, in order to execute a reception diversity operation, since both a second antenna and a switching device are employed in the reception system, the reception diversity operation can be realized in a relatively easy manner. However, it is difficult to perform a transmission diversity operation, and also, when simultaneous transmitting/receiving operations are carried out, diversity operations can be hardly carried out in the transmission system and the reception system respectively.

The present invention has been made to solve the above-described problems, and has an object to provide a mobile communication apparatus capable of simultaneously performing both a transmitting operation and a receiving operation, by which a reception sensitivity when the simultaneous transmitting/receiving operations are carried out can be improved.

Also, another object of the present invention is to provide a mobile communication apparatus capable of independently selecting one antenna from a plurality of antennas in both a transmitting operation and a receiving operation so as to improve either reception performance or reception performance by way of a diversity operation.

### <DISCLOSURE OF THE INVENTION>

A mobile communication apparatus of the present invention is featured by such a mobile communication apparatus capable of simultaneously performing operations for transmission and reception, the mobile communication apparatus, comprising: a transmission system for processing a transmission signal; a reception system for processing a reception signal; a plurality of antennas for connecting the transmission system and the reception system; a switch which selectively connects the plurality of antennas with the transmission system and the reception system; and an antenna selector which operates, to connect the transmission system with any one of the plurality of antennas at timing when a transmitting operation is performed, to connect the reception system to any one of the plurality of antennas at timing when a receiving operation is performed, to connect both a transmission-side filter in the transmission system and a reception-side filter in the reception system with any one of the plurality of antennas so as to constitute an antenna commonly-operable device at timing when transmitting/receiving operations are simultaneously performed, or to connect both the transmission system and the reception system with separate antennas among the plurality of antennas.

In accordance with the above-described arrangement, only the transmission system is connected to the antenna at the timing for performing the transmitting operation; only the reception system is connected to the antenna at the timing for performing the receiving operation; and both the transmissions system and the reception system are connected to the antenna at the timing when both the transmitting operation and the receiving operation are carried out at the same time, so that the antenna commonly-operable device can be constituted by both the transmission-side filter and the reception-side filter. As a consequence, a loss occurred when the simultaneous transmitting/receiving operations are not carried out can be reduced, and a reception sensitivity can be improved.

Also, the above-described antenna selector is featured by that the antenna selector performs a connection control operation for connecting the plurality of antennas with the transmission system and the reception system by using a transmission timing signal indicative of the timing for performing the transmitting operation and a reception timing signal indicative of the timing for performing the receiving operation as control signals.

In accordance with the above-explained structure, since the connection switching operation for connecting the antenna to both the transmission system and the reception system is performed by employing both the transmission timing signal and the reception timing signal, any one of the transmission system and the reception system can be firmly cut off from the antenna when the simultaneous transmitting/receiving operations are not carried out, so that the loss can be reduced and the reception sensitivity can be improved.

Also, the above-explained switch is featured by that the antenna selector independently performs a diversity operation during at least one of the transmitting operation and the receiving operation by using a transmission antenna switching signal indicative of the antenna selection when the transmitting operation is performed and a reception antenna switching signal indicative of the antenna selection when the receiving operation is performed as control signals.

In accordance with the above-explained structure, since the selection switching operation of the antennas is carried out by employing both the transmission antenna switching signal and the reception antenna switching signal, even when the transmitting operation and the receiving operation are carried out at the same time, one antenna can be separately selected from the plural antennas in the transmitting operation and the receiving operation, so that both the transmission diversity operation and the reception diversity operation can be carried out. As a consequence, either the reception performance or the transmission performance by the diversity operation can be improved.

### <BRIEF DESCRIPTION OF THE DRAWINGS>

Fig. 1 is a block diagram showing an arrangement of a major unit of a mobile communication apparatus according to an embodiment of the present invention;
Fig. 2 is a timing chart for representing transmission timing and reception timing when a voice communication operation is performed, and when an asymmetrical packet communication operation is carried out;
Fig. 3 is an operation explanatory diagram showing connection combinations of respective switches in an antenna selector in a table form; and
Fig. 4 is a block diagram for representing a structural example of the mobile communication apparatus corresponding to simultaneous transmitting/receiving operations.

It should be understood that in these drawings, reference numeral 11 shows an antenna "A"; reference numeral 12 indicates an antenna "B"; reference numeral 13 represents an antenna selector; reference numeral 14 denotes a transmission-side filter; reference numeral 15 shows a reception-side filter; reference numeral 16 indicates a transmitting unit; reference numeral 17 represents a receiving unit; reference numeral 19 denotes a switching control unit; reference numeral 21 represents a switch "A"; reference numeral 22 indicates a switch "B"; reference numeral 23 denotes a switch "C"; reference numeral 24 is a switch "B"; reference numeral 31 shows a transmission timing signal; reference numeral 32 indicates a reception timing signal; reference numeral 33 indicates a transmission antenna switching signal; and reference numeral 34 shows a reception antenna switching signal.

### <BEST MODE FOR CARRYING OUT THE INVENTION>

Referring now to drawings, embodiments of the present invention will be described.

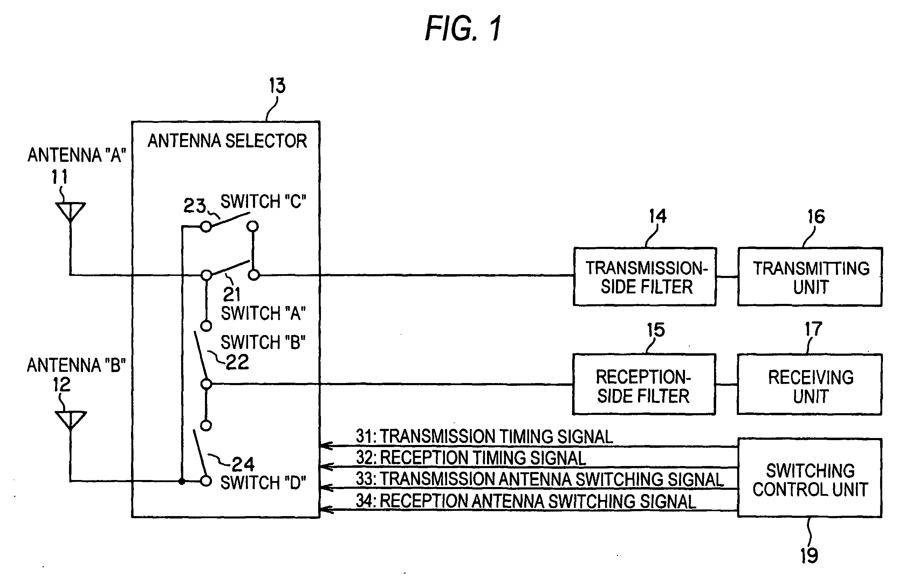

Fig. 1 is a block diagram showing an arrangement of a major unit of a mobile communication apparatus according to an embodiment of the present invention.

In this embodiment, as an example of the mobile communication apparatus according to the present invention, a structure of a connecting unit for connecting both transmitting/receiving units and an antenna of a portable telephone is shown which is employed in a mobile station terminal of a mobile communication system. The mobile communication apparatus of this embodiment corresponds to a voice conversation operation, a packet communication operation, and the like in the TDMA (Time Division Multiple Access) system. The mobile communication apparatus is arranged by that simultaneous transmitting/receiving operations can be carried out in the case of the packet communication operation, and the like.

As shown in Fig. 1, the mobile communication apparatus of this embodiment includes both a first antenna "A" 11, and a second antenna "B" 12, which transmit and receive wireless signals, and are connected to an antenna selecting device 13. The antenna selector 13 switches connections between these antennas 11 and 12. Both a transmission-side filter 14 and a reception-side filter 15, which constitute an antenna commonly-operable device, are connected to the antenna selector 13. The transmission-side filter 14 cuts off reception signals received by the antennas 11 and 12 in such a manner that the reception signals do not flow into a transmission system. A transmitting unit 16 for performing a modulating operation, an amplifying operation, and the like of transmission signals is connected to this transmission-side filter 14. The reception-side filter 15 cuts off transmission signals which are outputted from the transmitting unit 16 to the antennas 11 and 12 in such a manner that the transmission signals do not flow in to a reception system. A receiving unit 17 for performing an amplifying operation, a demodulating operation, and the like of reception signals is connected to this reception-side filter 15.

The antenna selector 13 is constituted by employing a switch "A" 21 which connects the antenna "A" 11 to the transmission system; a switch "B" 21 which connects the antenna "A" 11 to the reception system; a switch "C" 23 which connects the antenna "B" 12 to the transmission system; and a switch "D" 24 which connects the antenna "B" 12 to the reception system. Also, a switching control unit 19 is provided which performs switching control operations of connecting and disconnecting the switches 21, 22, 23, 24 of the antenna selector 13. The switching control operations of the switches 21 to 24 are carried out in response to a control signal supplied from the switching control unit 19. As control signals for switching the antennas, a transmission timing signal 31, a reception timing signal 32, a transmission antenna switching signal 33, and a reception antenna switching signal 34 are employed, which will be explained later.

Next, operations executed in the mobile communication apparatus of this embodiment will be described, while operations of the antenna selector 13 will now be mainly explained.

A first description is made of both a transmitting operation and a receiving operation in the case that only the first antenna "A" 11 is used without performing a diversity operation.

In such a case that a voice communication operation and the normal packet communication (will be referred to as "single packet communication" hereinafter) operation are carried out, only the switch "A" 21 of the antenna selector 13 is connected at such a timing when only a transmitting operation is carried out. At this time, a transmission signal is transmitted via the transmission-side filter 14, and the switch "A" 21 of the antenna selector 13 from the antenna "A" 11 to a base station (not shown), while the transmission signal has been modulated in the transmitting unit 16, and thereafter, the modulated transmission signal is amplified by a power amplifier, and then, the amplified transmission signal is outputted.

In the case that the voice communication operation and the single packet communication operation are carried out, only the switch "B" 22 of the antenna selector 13 is connected at such a timing when only a receiving operation is carried out. At this time, a reception signal received by the antenna "A" 11 is entered via the switch "B" 22 of the antenna selector 13 to the reception-side filter 15, interference waves are eliminated from this reception signal, and thereafter, the resulting reception signal is entered to the receiving unit 17 by which a receiving process operation such as an amplification and a demodulation is carried out with respect to this reception signal.

In the case that an asymmetrical packet communication operation is carried out by employing a plurality of reception slots by way of the TDMA system, when there are empty slots, the reception system is continuously operated. In this case, such a timing may occur where transmission slots are overlapped with reception slots in a temporal aspect and both the transmission system and the reception system are brought into simultaneous operation conditions, so that both the switch "A" 21 and the switch "B" 22 of the antenna selector 13 are connected. In other words, such a condition is obtained that the antenna commonly-operable device constructed of the transmission-side filter 14 and the reception-side filter 15 is connected to the antenna "A" 11, so that both the transmission system and the reception system are connected via the antenna commonly-operable device to the antenna "A" 11.

At this time, a transmission signal outputted from the transmitting unit 16 is transmitted/outputted via the transmission-side filter 14, and the switch "A" 21 of the antenna selector 13 from the antenna "A" 11 to the base station (not shown). In this case, while an impedance of the reception system as viewed from the transmission side becomes substantially infinite by the reception-side filter 15, the transmission signal is cut off by the reception-side filter 15, and thus, does not flow into the reception system. Also, a reception signal received by the antenna "A" 11 is entered via the switch "B" 22 of the antenna selector 13 and the reception-side filter 15 to the receiving unit 17, after interference waves are removed from this reception signal. In this case, while an impedance of the transmission system as viewed from the reception side becomes substantially infinite by the reception-side filter 15, the reception signal is cut off by the transmission-side filter 14, and thus, does not flow into the transmission system.

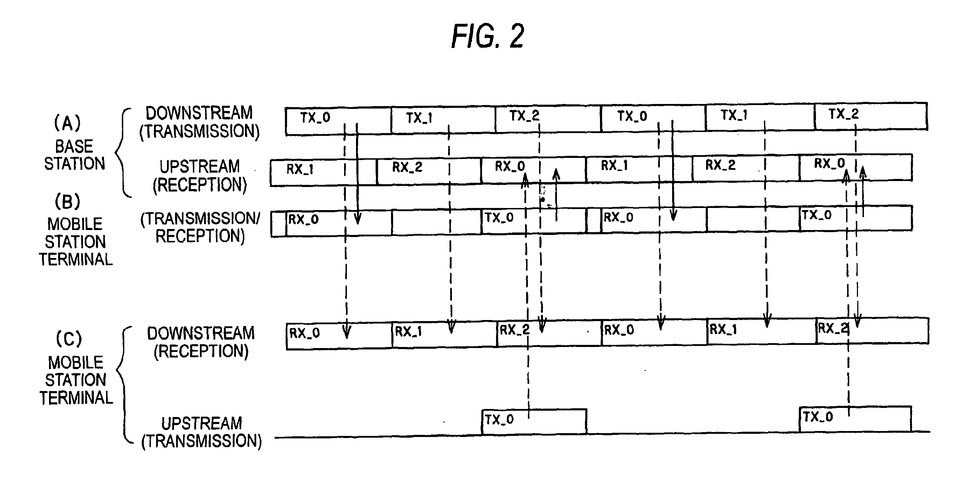

Referring now to Fig. 2, a description is made of timing as to both respective transmission slots and respective reception slots in an asymmetrical packet communication operation. Fig. 2 is a time chart for showing both the transmission timing and the reception timing when the voice communication operation is performed, and when the asymmetrical packet communication operation is carried out.

In the example of Fig. 2, a single sub-frame is subdivided into three slots, while transmission slots "TX-0", "TX-1", "TX-2" are provided whereas reception slots "RX-0", "RX-1 ", "RX-2" are provided. In the base station, as indicated in Fig. 2(A), both a down-stream transmitting operation and an up-stream receiving operation are carried out respectively in a continuous manner over all of the slots, and thus, transmitting/receiving operations are carried out at the same time in a parallel manner. In the case that the voice conversation operation and the single packet communication operation are carried out in the mobile station terminal, as represented in Fig. 2(B), a transmitting operation and a reception operation are alternately carried out in a time divisional manner by employing one reception slot and one transmission slot (namely, "RX-0" and "TX-0" in shown example), which are allocated to the mobile station terminal.

The asymmetrical packet communication operation corresponds to such a packet communication operation that while plural sets of slots for transmitting data from the base station to the mobile station terminal along the up-stream direction can be used, a receiving operation is carried out by the mobile station terminal in the continuous manner in such a case that there are empty slots. In the case that the asymmetrical packet communication operation is carried out in the mobile station terminal, as shown in Fig. 2(C), when there are empty slots, a receiving operation of the down-stream direction is carried out in a continuous manner by employing a plurality of slots (namely, all of "RX-0", "RX-1", and "RX-2" in shown example). Also, a transmitting operation of the up-stream direction is carried out in an intermittent manner by employing one transmission slot (namely, "TX-0" in shown example) which has been similarly allocated to the mobile station terminal in the case of the voice conversation operation. Since such an symmetrical communication operation is carried out, a data transfer rate along the down-stream direction can be increased approximately 3 times higher than that of the normal single packet communication operation executed in the TDMA system.

When the asymmetrical packet communication operation is carried out, the communication operation is brought into simultaneous transmitting/receiving operations at such a timing that a transmission slot and a reception slot are overlapped with each other (namely, "TX-0" and "RX-2" in shown drawing). In this embodiment, both the switch "A" 21 and the switch "B" 22 of the antenna selector 13 are connected by the switching control unit 19 only during this time period. As a result, while both the transmission-side filter 14 and the reception-side filter 15 are connected to the antenna "A" 11 so as to constitute the antenna commonly-operable device, a single antenna "A" 11 is connected to both the transmission system and the reception system. On the other hand, during a time period except for this time period, any one of the switch "A" 21 and the switch "B" 22 of the antenna selector 13 is connected in response to either the transmitting operation or the receiving operation, so that either the transmitting operation or the receiving operation is connected to the antenna "A" 11.

In order to execute the above-described antenna selecting switching operation, the transmission timing signal 31 and the reception timing signal 32 are employed as a control signal. The transmission timing signal 31 corresponds to such a signal which is turned ON (for example, high level) at timing when a transmitting operation is carried out. The reception timing signal 32 corresponds to such a signal which is turned ON (for example, high level) at timing when a receiving operation is carried out. Both the transmission system and the reception system can be independently connected to the antenna "A" 11 based upon the transmission timing signal 31 and the reception timing signal 32.

As previously explained, in an asymmetrical packet communication operation, since a transmitting operation and a receiving operation may be carried out at the same time in order to continuously perform the receiving operation, an antenna commonly-operable device for connecting both a transmission-side filter and a reception-side filter to an antenna is required. However, in the case that the antenna commonly-operable device is arranged, since a reception signal received from the antenna is equally distributed to both a transmission system and a reception system, a loss may be produced in the reception signal except that an input impedance of the transmission system completely becomes infinite with respect to a reception frequency. In the case of the asymmetrical packet communication operation, transfer frequent degrees of reception data directed to the own terminal are made different from each other depending upon busy condition on the side of a mobile communication network to which a base station is connected, and thus, the simultaneous transmitting/receiving operations are not always carried out. As a consequence, in this embodiment, when the simultaneous transmitting/receiving operations are carried out, the essentially required antenna commonly-operable device is constructed. To the contrary, when the simultaneous transmitting/receiving operations are not carried out, the transmission-side filter is cut out in order that an adverse influence by the transmission-side filter can be ignored, so that the reception sensitivity may be improved while suppressing the loss.

Next, a description is made of such a case that a diversity operation is carried out by using the first antenna "A" 11 and the second antenna "B" 12.

In accordance with the arrangement of this embodiment, as to any of the voice communication operation, the single packet communication operation, and the asymmetrical packet communication operation, diversity operations can be independently carried out in both a transmitting operation and a receiving operation by combining the switches 21 to 24 of the antenna selector 13. For example, when the transmitting operation is carried out and when the receiving operation is carried out, such an antenna having a better transmission characteristic, or a better reception characteristic (namely, signal level is higher) is selected from these two antennas 11 and 12.

In order to execute this antenna selection switching operation, both the transmission antenna switching signal 33 and the reception antenna switching signal 34 are employed as a control signal. The transmission antenna switching signal 33 corresponds to such a signal indicative of an antenna selection when a transmitting operation is carried out. For example, when the antenna "A" 11 is selected, the transmission antenna switching signal 33 becomes a high level, whereas when the antenna "B" 12 is selected, the transmission antenna switching signal 33 becomes a low level. The reception antenna switching signal 34 corresponds to such a signal indicative of an antenna selection when a receiving operation is carried out. For example, when the antenna "A" 11 is selected, the reception antenna switching signal 34 becomes a high level, whereas when the antenna "B" 12 is selected, the reception antenna switching signal 34 becomes a low level.

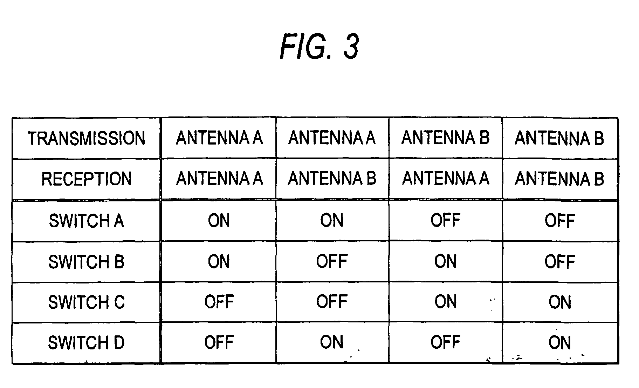

Fig. 3 is an operation explanatory diagram for indicating connection combinations of the respective switches in the antenna selector in a table form. In this drawing of Fig. 3, combinations of turning ON/OFF of the switches 21 to 24 are represented in the case that one of these antennas is selected during the transmitting operation and the receiving operation. In such a case that, for instance, the antenna "A" 11 is selected during the transmitting operation whereas the antenna "B" 12 is selected during the receiving operation in response to a communication environment of a mobile station terminal, the switch "A" 21 of the antenna selector 13 is turned ON; the switch "B" 22 thereof is turned OFF; the switched "C" 23 thereof is turned OFF; and the switch "D" 24 thereof is turned ON. As a result, the transmission system is connected to the switch "A" 21, and the reception system is connected to the switch "B" 22. In this case, since the transmission system and the reception system are separated from each other even under simultaneous transmitting/receiving operations condition, the deterioration of the reception sensitivity and the deterioration of the transmission distortion characteristic can be continuously suppressed.

Since both the transmission diversity operation and the reception diversity operation are carried out in the above-described manner, the proper antenna can be selected when the transmitting operation is carried out, and when the receiving operation is carried out, so that more suitable communication environments can be obtained.

In addition, since both the transmission antenna switching signal 33 and the reception antenna switching signal 34 are combined with both the transmission timing signal 31 and the reception timing signal 32 so as to execute the antenna selection switching operation, the deterioration of the transmission/reception characteristic under not such a simultaneous transmitting/receiving condition can be prevented. In this case, as shown in Fig. 3, turning ON/OFF of the switches 21 to 24 are firstly set in response to an antenna selection made by the transmission antenna switching signal 33 and the reception antenna switching signal 34. Then, under this condition, either the switch "B" 22 or the switch "D" 24 is turned ON to be connected, which have been selected only at the timing when the receiving operation is carried out in response to the reception timing signal 32, and either the switch "A" 11 or the switch "C" 23 is turned ON to be connected, which have been selected only at the timing when the transmitting operation is carried out in response to the transmission timing signal 31. It should be noted that the selecting operation of the antenna "A" 11 and the antenna "B" 12 may be arbitrarily changed at any time when the transmitting operation is carried out, and when the receiving operation is carried out. In this alternative case, as a method of controlling the antenna selector 13, for instance, logic statuses of a plurality of control signals may be alternatively combined with each other so as to control the switches 21 to 24.

As previously explained in this embodiment, when the voice conversation operation is performed and the single packet communication operation is carried out, while the transmission-side filter and the reception-side filter are not connected by the antenna selector, the two antennas can be independently selected to be connected. When the asymmetrical packet communication operation is carried out, while the transmission-side filter and the reception-side filter are connected by the antenna selector, the same antenna can be selected. Otherwise, while the transmission-side filter and the reception-side filter are not connected by the antenna selector, the two antennas can be independently selected to be connected. Also, since the two independent control signals such as the transmission antenna switching signal and the reception antenna switching signal are employed, the antenna diversity operation can be realized in both the transmitting operation and the receiving operation when the asymmetrical packet communication operation is performed.

As a consequence, in the case that the simultaneous transmitting/receiving operations are carried out during the asymmetrical packet communication operation, the transmission-side filter and the reception-side filter are connected via the antenna selector so as to constitute the antenna commonly-operable device, whereas in the case that the simultaneous transmitting/receiving operations are not carried out, the transmission-side filter is cut off by the antenna selector, so that the loss can be reduced and the reception sensitivity can be improved. Similarly, when the voice conversation operation is carried out and the single packet communication operation is performed, since such an arrangement can be employed by which the transmission-side filter and the reception-side filter are not connected by the antenna selector, a total number of the switches can be reduced, as compared with the arrangement for additionally providing the changing switch in order not to be connected via the transmission-side filter during the voice conversation operation, and the like, so that the apparatus can be made compact.

Also, since the antennas can be independently selected so as to be connected during the transmitting operation and the receiving operation, the communication qualities by using the antenna diversity can be improved not only during the receiving operation, but also during the transmitting operation, more specifically, during the asymmetrical packet communication operation where the simultaneous transmitting/receiving operations are carried out.

While the present invention has been described in detail, or with reference to the specific embodiment, apparently, the present invention can be modified and changed without departing from the technical scope and spirit of the present invention by an ordinarily skilled engineer.

The present application is based on Japan Patent Application No. 2002-134300 filed on May 9, 2002, the contents of which are incorporated herein for reference.

### <INDUSTRIAL APPLICABILITY>

As previously explained, in accordance with the present invention, in the mobile communication apparatus capable of performing the simultaneous transmitting/receiving operations, the reception sensitivity can be improved when the simultaneous transmitting/receiving operations are not carried out. Also, one antenna can be independently selected from the plural antennas during the transmitting operation and the receiving operation, and thus, either the reception performance or the transmission performance by the diversity operation can be improved.

## Claims

1. A mobile communication apparatus capable of simultaneously performing operations for transmission and reception, the mobile communication apparatus, comprising:
a transmission system for processing a transmission signal;
a reception system for processing a reception signal;
a plurality of antennas for connecting the transmission system and the reception system;
a switch which selectively connects the plurality of antennas with the transmission system and the reception system; and
an antenna selector which operates, to connect the transmission system with any one of the plurality of antennas at timing when a transmitting operation is performed, to connect the reception system to any one of the plurality of antennas at timing when a receiving operation is performed, to connect both a transmission-side filter in the transmission system and a reception-side filter in the reception system with any one of the plurality of antennas so as to constitute an antenna commonly-operable device at timing when transmitting/receiving operations are simultaneously performed, or to connect both the transmission system and the reception system with separate antennas among the plurality of antennas.

2. The mobile communication apparatus as set forth in claim 1, wherein the antenna selector performs a connection control operation for connecting the plurality of antennas with the transmission system and the reception system by using a transmission timing signal indicative of the timing for performing the transmitting operation and a reception timing signal indicative of the timing for performing the receiving operation as control signals.

3. The mobile communication apparatus as set forth in claim 1 wherein the antenna selector independently performs a diversity operation during at least one of the transmitting operation and the receiving operation by using a transmission antenna switching signal indicative of the antenna selection when the transmitting operation is performed and a reception antenna switching signal indicative of the antenna selection when the receiving operation is performed as control signals.
